# EUROPEAN PATENT APPLICATION

(11) **EP 1 375 909 A2**
(43) Date of publication of application: **02.01.2004**
(21) Application number: 03010409.5
(22) Date of filing: 08.05.2003
(51) Int. Cl.: F02N 15/06, F02N 15/00

(54) **Pinion-shaft support structure for starter in power unit**

(30) Priority: 19.06.2002 JP 2002178025
(71) Applicant: Honda Giken Kogyo Kabushiki Kaisha, Minato-ku, Tokyo (JP)
(72) Inventor: Kakemizu, Kenichiro, Wako-shi, Saitama (JP)
(74) Representative: Liska, Horst, Dr.-Ing.

(57) **Abstract**

Object: To provide a pinion-shaft support structure for starter in a power unit which can firmly fix a pinion holder to a crankcase thereby ensure stable supporting of the pinion shaft.

Means of Solution: In a case where one end of a pinion shaft (45) supporting a pinion (46) movably in an axial direction is supported with a bearing boss(48)which faces the inside of the transmission case(23) and which is formed in a crankcase (10), and the other end is supported with a boss (50a) of a pinion holder (50) provided in the transmission case (23), the pinion holder(50) is integrally fixed to the crankcase(10)with plural bolts (51) and (52) surrounding the boss (50a) at equal intervals.

## Description

The present invention relates to a pinion-shaft support structure for starter in power unit, in which, a transmission cover constructing a transmission case accommodating a transmission in cooperation with one side wall of a crankcase of an engine, is joined to the one side wall via a gasket having elasticity, and one end of a pinion shaft coupled to an output shaft of a starter motor supported with the crankcase and supporting a pinion engaged and removable with/from a ring gear of the engine, movably in an axial direction, is rotatably supported on one side wall of the crankcase facing the inside of said transmission case and the other end is rotatably supported with a pinion holder provided in said transmission case.

Conventionally, in a pinion-shaft support structure for a starter in such power unit, as disclosed in, e.g., Japanese Utility-Model Registration No. 2,582,275, an elastic support member in a contracted status is provided between a pinion holder and a transmission cover such that the pinion holder is held on one side wall of the crankcase by a repulsive force of the elastic support member.

To prevent the occurrence of noise due to engine vibration, the transmission cover is joined to the crankcase via a gasket having elasticity. In a case where the pinion holder is joined to the crankcase via the elastic support member by using this transmission cover as in the above-described conventional art, the pinion holder cannot be firmly supported on the crankcase, and the durability of the pinion shaft cannot be improved without difficulty.

The present invention has been made in view of the above situation, and has its object to provide a pinion-shaft support structure for starter in power unit which enables firm support of the pinion holder on the crankcase thereby ensures the durability of the pinion shaft.

To attain the foregoing object, the present invention provides as a first feature that in a power unit, in which a transmission cover constructing a transmission case accommodating a transmission in cooperation with one side wall of a crankcase of an engine, is joined to the one side wall via a gasket having elasticity, and wherein one end of a pinion shaft coupled to an output shaft of a starter motor supported with the crankcase and supporting a pinion engaged and removable with/from a ring gear of the engine, movably in an axial direction, is rotatably supported on one side wall of the crankcase facing the inside of said transmission case and the other end is rotatably supported with a pinion holder provided in said transmission case, said pinion holder is fixed to the crankcase by fastening members.

Note that the above-described fastening members correspond to a bolt 51 and an oddly-shaped bolt 52 in the embodiment of the present invention to be described later.

According to the first feature, the both ends of the pinion shaft are firmly supported with the crankcase and the pinion holder integrally fixed to the crankcase in the transmission case, thereby the durability of the pinion shaft can be improved, and the vibration of the shaft during its rotation can be suppressed. Accordingly, a proper engagement status between the pinion and the ring gear can be maintained, and the occurrence of noise from the engagement portion can be prevented as much as possible.

Further, the present invention provides a second feature, in addition to the first feature, that another fastening member that fastens said transmission cover to the crankcase side via an elastic member is integrally formed with said fastening member.

Note that the above-described fastening member corresponds to the oddly-shaped bolt 52 in the embodiment of the present invention to be described later, and the above-described other fastening member corresponds to a flanged hexagonal head 52b of the oddly-shaped bolt 52.

According to the second feature, as the same fastening member can be used for fixing the pinion holder to the crankcase and joining the transmission cover to the crankcase, the number of parts and the number of assembly steps can be reduced.

Further, the present invention provides a third feature, in addition to the first feature, that a portion of said pinion holder fastened to the crankcase is provided in plural positions at equal intervals around a bearing boss of the pinion holder supporting said pinion shaft.

According to the third feature, the bearing boss can be prevented from tilting by distributing a fastening force for the pinion holder to the crankcase uniformly around the bearing boss, and a proper position of the pinion shaft and accordingly, a proper position of the pinion can be maintained.

Further, the present invention provides a fourth feature, in addition to the second feature, that the structure further comprises a specialized fastening member that exclusively fixes the pinion holder to the crankcase as well as the fastening member integrally formed with said other fastening member.

The specialized fastening member corresponds to the bolt 51 in the embodiment of the present invention to be described later.

According to the fourth feature, upon assembly, first, a portion of the pinion holder is fixed to the crankcase by the specialized fastening member, and when finally the transmission cover is joined to the crankcase, the other portion of the pinion holder can be fixed to the crankcase by operating the fastening member having said other fastening member, thereby the assembly can be excellently made.

Further, the present invention provides as a fifth feature that in a power unit, in which a transmission cover constructing a transmission case accommodating a transmission in cooperation with one side wall of a crankcase of an engine, is joined to the one side wall via a gasket having elasticity, and wherein one end of a pinion shaft coupled to an output shaft of a starter motor supported with the crankcase and supporting a pinion engaged and removable with/from a ring gear of the engine, movably in an axial direction, is rotatably supported on one side wall of the crankcase facing the inside of said transmission case and the other end is rotatably supported with a pinion holder provided in said transmission case, said pinion holder is fixed to the crankcase with plural bolts in plural positions at equal intervals around said pinion shaft, and another fastening member that fastens said transmission cover to the crankcase side via an elastic member is integrally formed with a part of those said fastening bolts.

According to the fifth feature, the operations by the above-described first to fourth features can be attained at once.

A working example of the present invention will be described below in accordance with an embodiment of the present invention shown in the attached drawings.

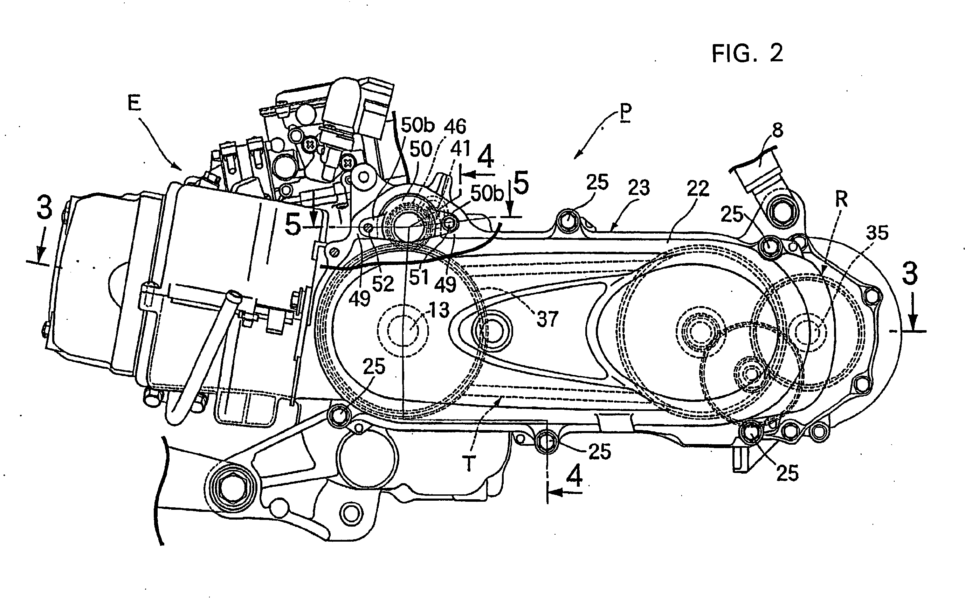

It is illustrated in:
Fig. 1;
   A side view of the motorcycle loaded with the power unit having the pinion-shaft support structure for starter according to the present invention.
Fig. 2:
   An enlarged side view of the power unit.
Fig. 3:
   A cross-sectional view along a line 3-3 in Fig. 2.
Fig. 4:
   A cross-sectional view along a line 4-4 in Fig. 2.
Fig. 5:
   A cross-sectional view along a line 5-5 in Fig. 2.

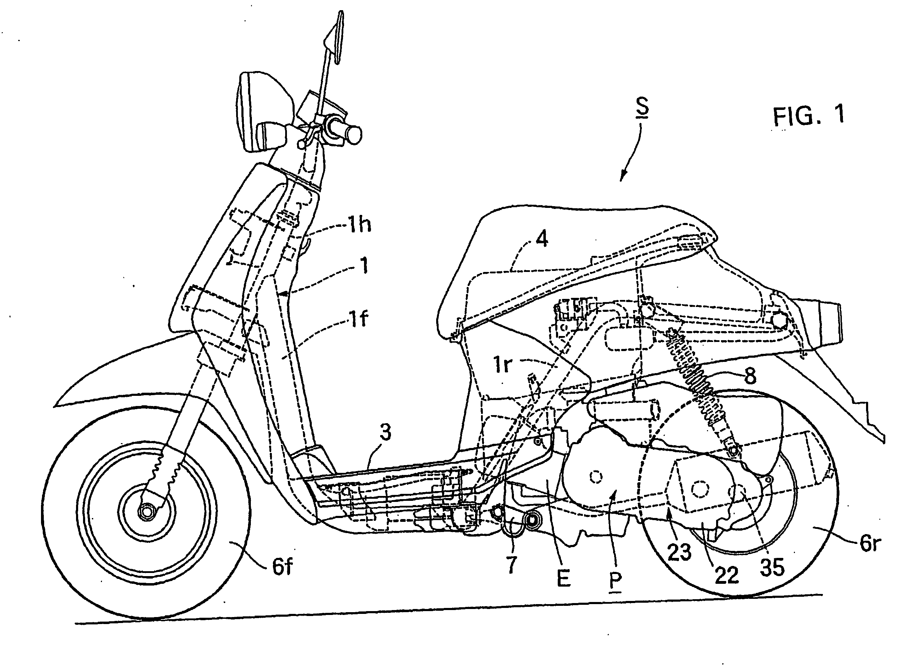

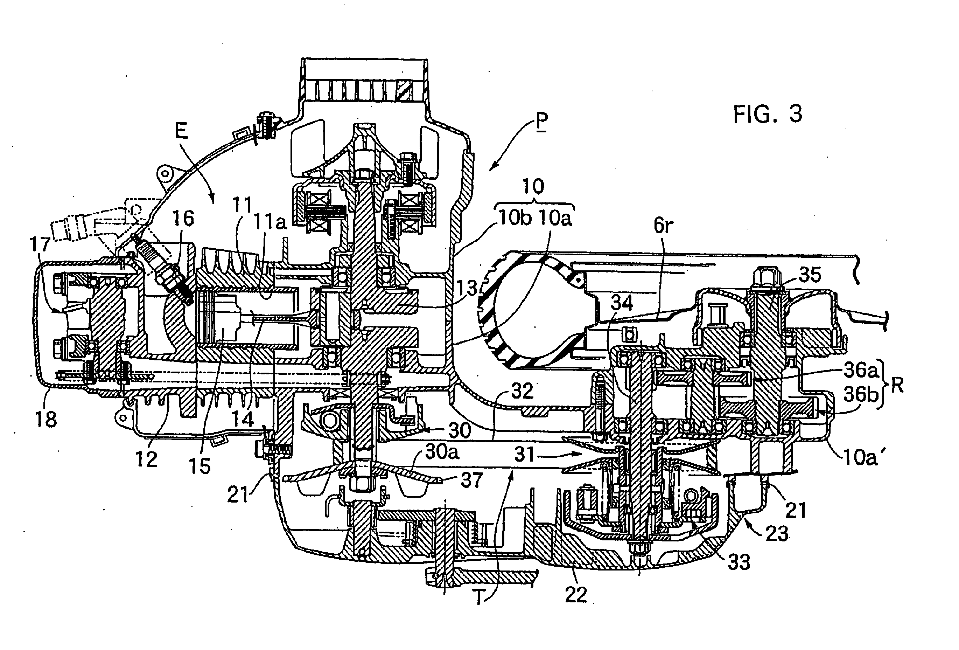

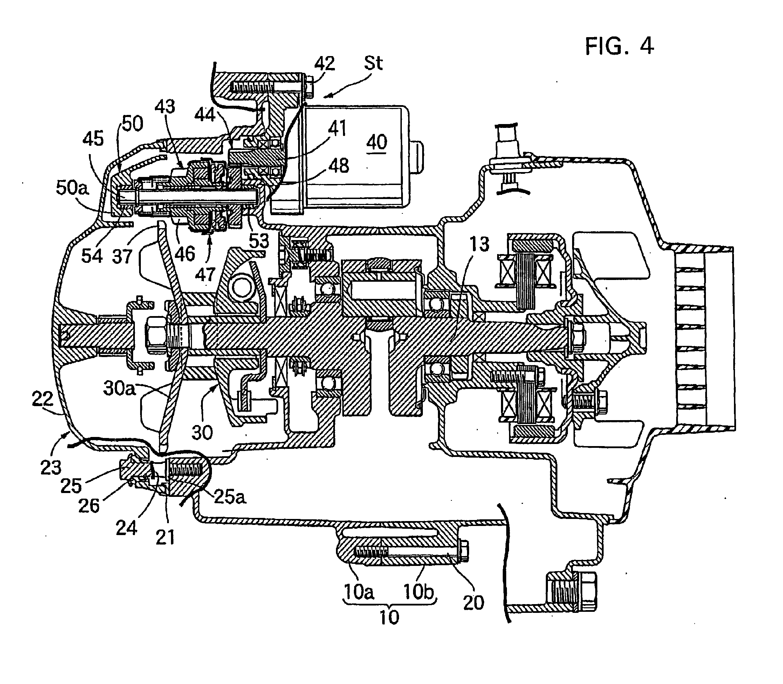

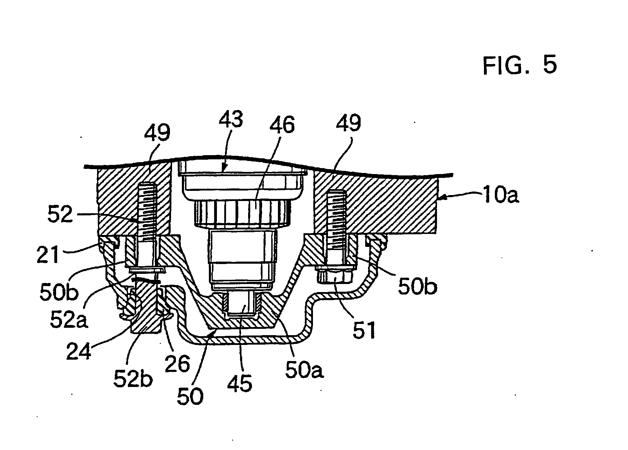

Fig. 1 is a side view of a motorcycle loaded with a power unit having a pinion-shaft support structure for starter according to the present invention; Fig. 2, an enlarged side view of the power unit; Fig. 3, a cross-sectional view along a line 3-3 in Fig. 2; Fig. 4, a cross-sectional view along a line 4-4 in Fig. 2; and Fig. 5, a cross-sectional view along a line 5-5 in Fig. 2.

Note that in the following description, front/rear and left/right are used with the motorcycle as a reference.

First, in Fig. 1, a vehicle body frame 1 of a motorcycle S has a front frame 1f which extends downward from a head pipe 1 steerably supporting a front fork 2 and which supports a step floor 3, and a rear frame 1r which extends diagonally upward from a rear end of the front frame 1f and which supports a luggage box 4 and a passenger seat 5. A front wheel 6f is supported at a lower end of the front fork 2. A power unit P which drives a rear wheel 6r while supporting the rear wheel is suspended upward/downward swingably from the rear frame 1r via a suspension link 7. A rear cushion 8 which cushions the upward/downward swing of the power unit P is attached between the rear frame 1r and the power unit P. Thus, the motorcycle S is constructed to have a form of scooter.

As shown in Figs. 2 to 4, an engine E of the power unit P has a crankcase 10, a cylinder block 11 coupled in a forward-canted position to a front end of the crankcase 10, and a cylinder head 12 joined to a front end of the cylinder block 11, as an engine main body. A crankshaft 13 which is provided in a leftward/rightward horizontal direction is supported with the crankcase 10 A piston 15 connected to the crankshaft 13 via a connecting rod 14 is fitted into a cylinder bore 11a of the cylinder block 11. An ignition plug 16 and valve train 17 are provided in the cylinder head 12. A head cover 18 covering the valve train 17 is joined to a front end surface of the cylinder head 12.

The crankcase 10 is divided into a left and right case half bodies 10a and 10b by a vertical plane including an axial line of the cylinder bore 11a and they are joined to each other by plural bolts 20 in peripheral portions. The left and right ends of the crankshaft 13 are supported via bearings with the both case half bodies 10a and 10b.

The left case half body 10a has an extended portion 10 a' extending rearward. A transmission case 23 is constructed with the left case half body 10a and the transmission cover 22 joined to an outer side wall of the left case half body via a gasket 21 having elasticity. At this time, the transmission cover 22 is fastened to the crankcase 10 by plural bolts 25, 25... inserted into plural through holes 24, 24... in the peripheral portion of the cover. A grommeted elastic member 26 in a contracted status is inserted between the respective bolts 25 and peripheral portions of the through holes 24 of the transmission cover 22 to avoid direct contact therebetween. Further, a flange 25a (See Fig. 4) in contact with an outer surface of the crankcase 10 is formed on the shafts of the respective bolts 25 so as to firmly engage the respective bolts 25 with the screw holes of the crankcase 10 but not to add excessive fastening widths to the gasket 21 and the elastic member 26. Thus, the transmission cover 22, floating-supported with the elastic member 26 and the gasket 21, blocks transmission of the vibration of the engine E from the crankcase 10 to the transmission cover 22, thereby prevents the occurrence of vibration noise from the transmission cover 22.

A belt-type continuously variable transmission T and a speed reducing unit R are accommodated in the above-described transmission case 23. Further, the rear wheel 6r is supported at a rear end of the transmission case 23 and a lower end of a rear cushion 7 is attached to the rear end of the transmission case.

The continuously variable transmission T has a drive pulley 30 of variable pitch diameter type provided at an end of the crankshaft 13, a driven pulley 31 of variable pitch diameter type provided on an input shaft 34 of the speed reducing unit R via a centrifugal clutch 33, and an endless belt 32 put between the above-described both pulleys 30 and 31. The continuously variable transmission automatically connects the centrifugal clutch 33 and performs transmission between the drive pulley 30 and the driven pulley 31 in correspondence with the increase in the number of revolutions of the crankshaft 13. A ring gear 37 with which the pinion 46 of the starter to be described later is engaged is formed in the peripheral portion of a fixed pulley half body 30a fixed on the tip side of the crankshaft 13 of the drive pulley 30.

Further, the speed reducing unit R is constructed with 2 arrays of speed reducing gear arrays 36a and 36b, provided between the input shaft 34 and an output shaft 35, to decelerate the rotation of the input shaft 34 by 2 steps and transmit the rotation to the output shaft 35. The rear wheel 6r is attached to an outer end of the output shaft 35.

As shown in Figs. 4 and 5, a starter motor 40 is attached to the left case half body 10a with a bolt 42 such that its output shaft 41 parallel to the crankshaft 13 is inserted in the transmission case 23. A starter St is constructed with the starter motor 40 and a starting transmission mechanism 43 which transmits the rotation of the output shaft 35 to the ring gear 37. The starting transmission mechanism 43, which is well known, comprises a pinion shaft 45 connected to the output shaft 41 of the starter motor 40 via a speed reducing gear array 44, a pinion 46 engageable and removable with/from the ring gear 37 and supported on the above-described pinion shaft 45 movably in an axial direction, and an eject mechanism 47 which shifts the pinion 46 to engage it with the ring gear 37 upon rotation of the pinion shaft 45.

One end of the above-described pinion shaft 45 is supported with a bearing 48 integrally formed with the side wall of the left case half body 10a facing the inside of the transmission case 23, via a bush 53. Further, the other end is supported with a bearing boss 50a of a pinion holder 50 provided in the transmission case 23, via a bush 54.

The above-described pinion holder 50 have plural attachment ribs 50b, 50b integrally-formed with the pinion holder, provided at equal intervals around the bearing boss 50a, illustrated as a pair of attachment ribs 50b, 50b provided with a pitch of 180°. On the other hand, support members 49, 49 which extend from a joint surface with the transmission cover 22 and which receive the above-described attachment ribs 50b, 50b, are integrally formed with the left case half body 10a. The attachment ribs 50b, 50b are integrally fixed to these support members 49, 49 with bolts 51 and 52. At this time, the one bolt 51 exclusively relates to fixing of the corresponding attachment rib 50b, while the bolt 52 also relates to joining of the transmission cover 22 to the left case half body 10a as a oddly-shaped bolt. Especially, the bolt 51 is provided in the vicinity of the output shaft 41 of the starter motor 40.

That is, the shaft of the oddly-shaped bolt 52 is longer than the shaft of the other bolt 51 such that the former shaft is passed through a through hole 24 formed in a peripheral portion of the transmission cover 22. A flange 52a which fastens the corresponding attachment rib 50b toward the left case half body 10a is integrally formed with a middle portion of the shaft of the oddly-shaped bolt, and further, a flanged hexagonal head 52b opposed to an outer side surface of the transmission cover 22 so as to press the outer side surface is integrally formed with an outer end of the shaft. The grommeted elastic member 26 in a contracted status is provided between the oddly-shaped bolt 52 and the peripheral portion of the through hole 24 of the transmission cover 22 so as to avoid direct contact therebetween. When the elastic member 26 is attached to the through hole 24 and the oddly-shaped bolt 52 inserted through the hole is engaged with a screw hole of the corresponding support member 49, the flange 52a fastens the rib 50b to the support member 49, thus firmly fixing the pinion holder 50 to the left case half body 10a in cooperation with the bolt 51, and at the same time, provides the gasket 21 and the elastic member 26 with appropriate fastening widths, which maintains floating support of the transmission cover 22.

Next, an operation of the embodiment will be described.

When the starter motor 40 is activated so as to start the engine E, as the pinion 46 is engaged with the ring gear 37 in accordance with the rotation of the pinion shaft 45 and drives the ring gear, the crankshaft 13 is cranked from the ring gear 37, thus starting is made. During this time, as the rotating pinion shaft 45 is firmly supported with the bearing boss 48 of the left case half body 10a and the bearing boss 50a of the pinion holder 50 integrally fixed to the left case half body 10a, the occurrence of vibration can be prevented. Accordingly, the durability of the pinion shaft 45 can be improved, the support of the pinion 46 is stabilized thereby the engagement status between the pinion 46 and the ring gear 37 is appropriately maintained, and the occurrence of noise from the engaged portion can be prevented as much as possible.

Especially, as the pinion holder 50 is fixed to the left case half body 10a with the plural bolts 51 and 52 provided at equal intervals around the bearing boss 50a, the bearing boss 50a can be prevented from tilting by uniformly distributing a fixing force for the pinion holder 50 to the left case half body 10a around the bearing boss 50a, thereby a proper position of the pinion shaft 45 and accordingly, a proper position of the pinion 46 can be maintained.

Further, as the normal bolt 51, which is first fastened, out of the above-described plural bolts 51 and 52, is provided in the vicinity of the output shaft 41 of the starter motor 40, an actuation reaction force of the output shaft 41 of the starter motor 40 can be effectively supported.

Further, as the oddly-shaped bolt 52 out of the above-described bolts is also used for joining the transmission cover 22 to the left case half body 10a, the initial number of the plural bolts 25, 25... for joining the transmission cover 22 to the left case half body 10a can be reduced by the use of the oddly-shaped bolt, and accordingly, the number of assembly steps can be reduced, thus the costs can be reduced. Further, as the elastic member 26 in a contracted status is provided between the oddly-shaped bolt 52 and the peripheral portion of the through hole 24 of the transmission cover 22, the floating status of the transmission cover 22 can be maintained, and the occurrence of vibration noise from the transmission cover 22 can be prevented.

Further, the normal bolt 51 exclusively for fixing is also used for fixing the pinion holder 50 to the left case half body 10a. Upon assembly, the one attachment rib 50b of the pinion holder 50 is first fixed to the support member 49 of the left case half body 10a with the normal bolt 51, and at the same time, positioning between the other attachment rib 50b and the corresponding support member 49 is made. Accordingly, when finally the oddly-shaped bolt 52 is operated with the bolts 25, 25... to join the transmission cover 22 to the left case half body 10a, as the other attachment rib 50b can be firmly fixed to the corresponding support member 49 with the oddly-shaped bolt 52, the assembly can be excellently made.

The present invention is not limited to the above-described embodiment, but various design changes can be made within a scope without departing from the subject matter.

As described above, according to the first feature of the present invention, in a power unit, a transmission cover constructing a transmission case accommodating a transmission in cooperation with one side wall of a crankcase of an engine, is joined to the one side wall via a gasket having elasticity, and one end of a pinion shaft coupled to an output shaft of a starter motor supported with the crankcase and supporting a pinion engaged and removable with/from a ring gear of the engine, movably in an axial direction, is rotatably supported on one side wall of the crankcase facing the inside of said transmission case and the other end is rotatably supported with a pinion holder provided in said transmission case, said pinion holder is fixed to the crankcase with fastening members. The both ends of the pinion shaft are firmly supported with the crankcase and the pinion holder integrally fixed with the crankcase in the transmission case thereby the durability of the pinion shaft is improved, and the vibration of the shaft during rotation is suppressed. Accordingly, the engagement status between the pinion and the ring gear can be appropriately maintained and the occurrence of noise from the engaged portion can be prevented as much as possible.

Further, according to the second feature of the present invention, in addition to the first feature, another fastening member that fastens said transmission cover to the crankcase side via an elastic member is integrally formed with said fastening member. Accordingly, as the same fastening member can be used for fixing the pinion holder to the crankcase and joining the transmission cover to the crankcase, the number of parts and the number of assembly steps can be reduced.

Further, according to the third feature of the present invention, in addition to the first feature, a portion of said pinion holder fastened to the crankcase is provided in plural positions at equal intervals around a bearing boss of the pinion holder supporting said pinion shaft. Accordingly, the bearing boss can be prevented from tilting by distributing a fastening force for the pinion holder to the crankcase uniformly around the bearing boss, and a proper position of the pinion shaft and accordingly, a proper position of the pinion can be maintained.

Further, according to the fourth feature, in addition to the second feature, the structure further comprises a specialized fastening member that exclusively fixes the pinion holder to the crankcase as well as the fastening member integrally formed with said other fastening member. Upon assembly, first, one portion of the pinion holder is fixed to the crankcase with the specialized fastening member, and when finally the transmission cover is joined to the crankcase, the other portion of the pinion holder can be fixed to the crankcase by operating the fastening member having said other fastening member, thereby the assembly can be excellently made.

Further, according to the fifth feature of the present invention, in a power unit, a transmission cover constructing a transmission case accommodating a transmission in cooperation with one side wall of a crankcase of an engine, is joined to the one side wall via a gasket having elasticity, and wherein one end of a pinion shaft coupled to an output shaft of a starter motor supported with the crankcase and supporting a pinion engaged and removable with/from a ring gear of the engine, movably in an axial direction, is rotatably supported on one side wall of the crankcase facing the inside of said transmission case and the other end is rotatably supported with a pinion holder provided in said transmission case, said pinion holder is fixed to the crankcase with plural bolts in plural positions at equal intervals around said pinion shaft, and another fastening member that fastens said transmission cover to the crankcase side via an elastic member is integrally formed with a part of those said fastening bolts. Accordingly, the operations by the above-described first to fourth features can be attained at once.
Object: To provide a pinion-shaft support structure for starter in a power unit which can firmly fix a pinion holder to a crankcase thereby ensure stable supporting of the pinion shaft.

Means of Solution: In a case where one end of a pinion shaft 45 supporting a pinion 46 movably in an axial direction is supported with a bearing boss 48 which faces the inside of the transmission case 23 and which is formed in a crankcase 10, and the other end is supported with a boss 50a of a pinion holder 50 provided in the transmission case 23, the pinion holder 50 is integrally fixed to the crankcase 10 with plural bolts 51 and 52 surrounding the boss 50a at equal intervals.

## Claims

1. A pinion-shaft support structure for starter in power unit, in which in the power unit, a transmission cover (22) constructing a transmission case (23) accommodating a transmission (T) in cooperation with one side wall of a crankcase (10) of an engine (E), is joined to the one side wall via a gasket (21) having elasticity, and one end of a pinion shaft (45) coupled to an output shaft (41) of a starter motor (40) supported with the crankcase (10) and supporting a pinion (46) engaged and removable with/from a ring gear (37) of the engine (E), movably in an axial direction, is rotatably supported on one side wall of the crankcase (10) facing the inside of said transmission case (23) and the other end is rotatably supported with a pinion holder (50) provided in said transmission case (23),
wherein said pinion holder (50) is fixed to the crankcase (10) with fastening members (51, 52).

2. The pinion-shaft support structure for starter in power unit according to claim 1,
wherein another fastening member (52b) that fastens said transmission cover (22) to the crankcase (10) side via an elastic member (26) is integrally formed with said fastening member (52).

3. The pinion-shaft support structure for starter in power unit according to claim 1,
wherein a portion (49) of said pinion holder (50) fastened to the crankcase (10) is provided in plural positions at equal intervals around a bearing boss (50a) of the pinion holder (50) supporting said pinion shaft (45).

4. The pinion-shaft support structure for starter in power unit according to claim 2,
wherein the structure further comprises a specialized fastening member (51) that exclusively fixes the pinion holder (50) to the crankcase (10) as well as the fastening member (52) integrally formed with said other fastening member (52b).

5. A pinion-shaft support structure for starter in power unit, in which in the power unit, a transmission cover (22) constructing a transmission case (23) accommodating a transmission (T) in cooperation with one side wall of a crankcase (10) of an engine (E), is joined to the one side wall via a gasket (21) having elasticity, and one end of a pinion shaft (45) coupled to an output shaft (41) of a starter motor (40) supported with the crankcase (10) and supporting a pinion (46) engaged and removable with/from a ring gear (37) of the engine (E), movably in an axial direction, is rotatably supported on one side wall of the crankcase (10) facing the inside of said transmission case (23) and the other end is rotatably supported with a pinion holder (50) provided in said transmission case (23),
wherein said pinion holder (50) is fixed to the crankcase (10) with plural bolts (51, 52) in plural positions at equal intervals around said pinion shaft (45), and wherein another fastening member (52b) that fastens said transmission cover (22) to the crankcase (10) side via an elastic member (26) is integrally formed with a part of those said fastening bolts (52).
